# EUROPÄISCHE PATENTSCHRIFT

(11) **EP 3 023 224 B1**
(45) Veröffentlichungstag und Bekanntmachung des Hinweises auf die Patenterteilung: **13.03.2019**
(21) Anmeldenummer: 15185837.0
(22) Anmeldetag: 18.09.2015
(51) Int. Cl.: B29C 65/06, B29C 65/08

(54) **SONOTRODE, SCHWEISSVORRICHTUNG MIT SONOTRODE SOWIE DAZUGEHÖRIGES SCHWEISSVERFAHREN**
SONOTRODE, WELDING DEVICE WITH SONOTRODE AND CORRESPONDING WELDING METHOD
SONOTRODE, DISPOSITIF DE SOUDAGE DOTÉ D'UNE SONOTRODE ET PROCÉDÉ DE SOUDAGE ASSOCIÉ

(30) Priorität: 24.11.2014 DE 102014223907
(43) Veröffentlichungstag der Anmeldung: 25.05.2016
(73) Patentinhaber: Branson Ultraschall Niederlassung der Emerson Technologies GmbH & Co. oHG, 63128 Dietzenbach (DE)
(72) Erfinder: Jaume, Cidoncha, 08811 Canyelles; Barcelona (ES); Sergi, Gabarró, 08320 El Masnou, Barcelona (ES)
(74) Vertreter: HWP Intellectual Property

(56) Entgegenhaltungen:
- EP-A2- 0 242 480
- DE-A1-102011 006 930
- DE-U1- 8 811 803
- FR-A1- 2 880 520
- GB-A- 2 023 065
- US-A- 3 376 179
- US-A- 4 713 131
- US-A1- 2004 076 790
- US-A1- 2004 103 910

## Beschreibung

Die vorliegende Erfindung betrifft eine Sonotrode zum Reibschweißen von mindestens zwei Fügeteilen, die zumindest teilweise aus verschweißbarem Kunststoff bestehen, eine entsprechende Schweißvorrichtung sowie ein entsprechendes Schweißverfahren. Bei der Herstellung von Kunststoffbeuteln für beispielsweise Seife, Getränke oder ähnliche Produkte, muss zunächst ein zu befüllender Kunststoffbeutel in Rohform bereitgestellt werden. Die Rohform des Kunststoffbeutels verfügt über eine Öffnung, durch die die Rohform mit Produkt befiillbar ist. Üblicherweise ist diese Öffnung zwischen sich gegenüberliegenden Enden einer Folie oder zwischen zwei separaten Folien gebildet.
Zur Herstellung der Rohform werden entweder die zwei Folien oder die eine übereinanderliegende Folie mittels Heißstempeln an den Rändern miteinander verbunden. Ebenso kann ein späteres Verschließen der Öffnung mittels Heißstempeln erfolgen. Alternativ zum Heißstempeln ist bekannt, die Folien mittels Ultraschall miteinander zu verschweißen. Die Ultraschallwellen werden hierbei senkrecht von der Sonotrode in die Oberflächen der miteinander zu verschweißenden Folien eingeleitet. Eine bekannte Vorgehensweise ist beispielsweise die Verarbeitung von Schlauchfolien. Diese werden von oben befüllt und nach erfolgter Füllung oben verschlossen. Diese Vorgehensweise wird daher auch als "vertikal form and fill" bezeichnet.
Ein Nachteil dieser bekannten Vorrichtungen sind die geringe Taktrate sowie ein hoher Platzbedarf. Insbesondere beim Ultraschallschweißen kann aufgrund des zur Verfügung stehenden Raums oft nur eine Ultraschallsonotrode eingesetzt werden, so dass daraus eine geringe Durchsatzrate für die Kunststoffbeutel resultiert.

Ein Verfahren und eine Vorrichtung zum Hochfrequenzverbinden oder Abdichten von Materialien sind in US 3,376,179 beschrieben. Hierbei wird zwischen zwei Oberflächen des Materials eine mechanische Hochfrequenzvibration direkt auf die Oberflächen angewendet. Die Vibrationen weisen einen Hauptbewegungsanteil in Richtung parallel zu den Oberflächen auf, um so eine Reibbewegung darauf auszuführen, die Wärme erzeugt und die Materialien erweicht. Anschließend werden die Materialien aneinander gepresst, bis das erweichte Material sich erneut verfestigt.
Ein Ultraschallschweißgerät ist in der DE 88 11 803 U1 beschrieben. Dabei ist ein Mittelkanal eines keilförmigen Werkzeugs des Ultraschallschweißgeräts um mindestens 0,3 mm tiefer als das Tiefste der Aufrauung. Weiterhin ist eine Querrille im Werkzeug durch den Mittelkanal unterbrochen.
US 4,713,131 beschreibt eine Vorrichtung und ein Verfahren zum Ultraschallverbinden von Materiallagen aus thermoplastischem Material. Die Vorrichtung umfasst einen Tragrahmen, ein Paar Verbindungswalzen, die einen Spalt mit einer Achse parallel zur Walzenachse bilden, einen Motor, um mindestens eine der Walzen anzutreiben, eine Sonotrode mit Spitze sowie einen Ultraschallwandler, um die Sonotrode und die Spitze in Richtung der Längsachse der Sonotrode schwingen zu lassen. Die Sonotrode ist so angeordnet, dass sie quer zur Achse des Spalts schwingt, sodass benachbarte Ränder der Lagen durch den Spalt bewegt werden können. Die Ränder werden dann auf jeder Seite der Spitze gleichmäßig geschmolzen und im Spalt zusammengepresst und verschweißt.
Eine weitere Ulraschallschweißvorrichtung ist in EP 0 242 480 A2 beschrieben. Die Vorrichtung umfasst eine Sonotrode und einen Amboss, die Kontaktoberflächen in Kontakt mit den zu verschweißenden Elementen bereitstellen. Jede Kontaktoberfläche ist bereitgestellt mit einer Mehrzahl von Rillen, um eine Mehrzahl von Vorsprüngen bereitzustellen.
US 2004/0103910 A1 beschreibt einen Applikator für Ersatzhaarstränge, der mit Ultraschallschwingungen arbeitet.

Ein Stapelartikel mit textilem Rücken sowie ein Verfahren zum Herstellen davon mittels Ultraschallschweißen sind in US 2004/0076790 A1 beschrieben. Schließlich beschreibt GB 2 023 065 A ein Verfahren und eine Vorrichtung zum Verbinden von gegenüberliegenden Beinbereichen von gegossenen Kupplungselementen mittels einer Ultraschall-Sonotrode. Dokument GB 2 023 065 A offenbart eine Sonotrode zum Reibschweißen von mindestens zwei Fügeteilen, die zumindest teilweise aus verschweißbarem Kunststoff bestehen, umfassend a) einen Grundkörper, der eine Längsachse aufweist, die in einer Arbeitsebene der Sonotrode liegt, wobei die Sonotrode im Betrieb innerhalb dieser Arbeitsebene auslenkbar ist, wobei b) eine erste Arbeitsfläche bezogen auf die Längsachse lateral an der Sonotrode angeordnet ist, so dass Fügeenergie lateral in eine erste Fügezone einleitbar ist, und c) eine zweite Arbeitsfläche bezogen auf die Längsachse lateral an der Sonotrode angeordnet ist, so dass Fügeenergie lateral in eine zweite Fügezone einleitbar ist, wobei d) sich im Betrieb die erste Arbeitsfläche in einer ersten Ebene parallel zur Arbeitsebene und die zweite Arbeitsfläche sich in einer zweiten Ebene parallel zur Arbeitsebene bewegen.

Die objektive technische Aufgabe der vorliegenden Erfindung ist daher die Bereitstellung einer Schweißvorrichtung, die im Vergleich zu bekannten Schweißvorrichtungen weniger Platzbedarf bei einer gleichzeitig höheren Takt- bzw. Ausstoßrate aufweist.

Die obige objektive technische Aufgabe wird gelöst durch eine Sonotrode gemäß dem unabhängigen Patentanspruch 1, eine Schweißvorrichtung gemäß dem Patentanspruch 3 sowie ein Schweißverfahren gemäß dem unabhängigen Patentanspruch 5. Vorteilhafte Ausführungsformen ergeben sich aus der nachfolgenden Beschreibung, den Zeichnungen sowie den abhängigen Patentansprüchen.
Die erfindungsgemäße Sonotrode bzw. Reibschweißsonotrode zum Reibschweißen von mindestens zwei Fügeteilen, die zumindest teilweise aus verschweißbarem Kunststoff bestehen, umfasst einen Grundkörper, der eine Längsachse aufweist, die in einer Arbeitsebene der Sonotrode liegt, wobei die Sonotrode im Betrieb innerhalb dieser Arbeitsebene auslenkbar ist, wobei eine erste Arbeitsfläche bezogen auf die Längsachse lateral an der Sonotrode angeordnet ist, so dass Fügeenergie lateral in eine erste Fügezone zwischen einem ersten und einem zweiten Fügeteil einleitbar ist, und eine zweite Arbeitsfläche bezogen auf die Längsachse lateral an der Sonotrode angeordnet ist, so dass Fügeenergie lateral in eine zweite Fügezone zwischen einem dritten und einem vierten Fügeteil einleitbar ist, wobei sich im Betrieb die erste Arbeitsfläche in einer ersten Ebene parallel zur Arbeitsebene und die zweite Arbeitsfläche in einer zweiten Ebene parallel zur Arbeitsebene bewegen.
Die obige erfindungsgemäß bevorzugte Sonotrode wird nun näher erläutert anhand einer Funktionsweise einer Reibschweißvorrichtung während eines entsprechenden Reibschweißverfahrens, wobei beispielhaft auf die Herstellung eines Kunststoffbeutels Bezug genommen wird. Die Schweißvorrichtung umfasst die erfindungsgemäß bevorzugte Sonotrode sowie einen ersten Amboss mit einer ersten Druckfläche und einen zweiten Amboss mit einer zweiten Druckfläche. Der Grundkörper der Sonotrode ist beispielhaft im Wesentlichen quaderförmig ausgestaltet. Die Längsachse verläuft durch ein erstes Ende und ein zweites Ende des Grundkörpers, wobei das erste Ende im Betrieb der Sonotrode an der Schweißvorrichtung angeordnet ist. Vorzugsweise benachbart dem zweiten Ende sind die erste und die zweite Arbeitsfläche angeordnet.
Das Schweißverfahren umfasst zunächst den Schritt des Bereitstellens eines ersten und eines zweiten Fügeteils sowie eines dritten und eines vierten Fügeteils, die zumindest teilweise aus einem verschweißbaren Kunststoff bestehen. Zur besseren Verständlichkeit wird beispielhaft von vier einzelnen Folien ausgegangen. Alternativ wäre eine sich überlappend gelegte Folie als erstes und zweites Fügeteil denkbar. Dasselbe gilt für das dritte und vierte Fügeteil, wobei auch entsprechende Kombinationen möglich sind.

Zum Verschweißen des ersten und des zweiten Fügeteils miteinander werden die beiden Fügeteile zwischen der ersten lateralen Arbeitsfläche der Sonotrode und der ersten Druckfläche des ersten Ambosses angeordnet. Dann wird der erste Amboss mit der ersten Druckfläche in Richtung der ersten Arbeitsfläche der Sonotrode bewegt. Somit gelangt beispielsweise das erste Fügeteil in Anlage an der ersten Arbeitsfläche der Sonotrode und die erste Druckfläche des ersten Ambosses drückt bzw. presst das erste und das zweite Fügeteil gegen die erste Arbeitsfläche der Sonotrode.

Während die erste Druckfläche des ersten Ambosses das erste und das zweite Fügeteil gegen die erste Arbeitsfläche der Sonotrode drückt, wird die Sonotrode zum Schwingen in ihrer Arbeitsebene, vorzugsweise entlang ihrer Längsachse, angeregt. Dadurch führt die erste Arbeitsfläche eine Bewegung in der ersten Ebene parallel zur Arbeitsebene der Sonotrode aus. Die zweite Arbeitsfläche führt in gleicher Weise eine Bewegung in der zweiten Ebene parallel zur Arbeitsebene der Sonotrode aus. Bei einer ausschließlichen Anregung der Sonotrode entlang der Längsachse bewegt sich die jeweilige Arbeitsfläche somit in der jeweiligen Ebene entlang einer Geraden, die insbesondere parallel zur Längsachse angeordnet ist. In Abhängigkeit von der Ausgestaltung der Sonotrode ist gemäß einer weiteren bevorzugten Ausführungsform der vorliegenden Erfindung eine Bewegung der beiden Arbeitsflächen entlang einer krummlinigen Bahn in der jeweiligen Ebene realisierbar. Mit dieser Bewegung erfolgt ebenfalls ein bevorzugtes Verschweißen des ersten und des zweiten Fügeteils miteinander sowie bevorzugt des dritten und des vierten Fügeteils, wie unten näher erläutert ist.

Gleichzeitig oder im Wechsel mit den obigen Schritten zum Verschweißen des ersten und des zweiten Fügeteils miteinander können mit der erfindungsgemäßen Sonotrode ein drittes und ein viertes Fügeteil verschweißt werden. Hierzu werden das dritte und das vierte Fügeteil zwischen der zweiten lateralen Arbeitsfläche der Sonotrode und der zweiten Druckfläche des zweiten Ambosses angeordnet. Dann wird der zweite Amboss mit der zweiten Druckfläche in Richtung der zweiten Arbeitsfläche der Sonotrode bewegt. Somit gelangt beispielsweise das dritte Fügeteil in Anlage mit der zweiten Arbeitsfläche der Sonotrode und die zweite Druckfläche des zweiten Ambosses drückt bzw. presst das dritte und das vierte Fügeteil gegen die zweite Arbeitsfläche der Sonotrode.

Während die zweite Druckfläche des zweiten Ambosses das dritte und das vierte Fügeteil gegen die zweite Arbeitsfläche der Sonotrode drückt, wird die Sonotrode zum Schwingen entlang ihrer Längsachse und/oder quer zu ihrer Längsachse angeregt. Auf diese Weise erfolgt ein Verschweißen des dritten und des vierten Fügeteils miteinander.

Wie oben erwähnt, liegen die erste und die zweite Arbeitsfläche der Sonotrode erfindungsgemäß an einer Seitenfläche der Sonotrode vor, sind also bezogen auf die Längsachse, entlang der die Sonotrode im Betrieb schwingt, lateral vorhanden. Somit befinden sich die Arbeitsflächen nicht an einem axialen Ende der Sonotrode, wie es im Stand der Technik üblich ist, sondern an einer Seitenfläche. Hierbei ist zu beachten, dass bei einer Schwingung der Sonotrode quer zur Längsachse des Grundkörpers die erste und die zweite Arbeitsfläche ebenfalls an den Seiten des Grundkröpers angeordnet sind, die parallel zur Schwingungsrichtung verlaufen. Dies wird später unter Bezugnahme auf die Zeichnungen verdeutlicht. Vorzugsweise sind die ersten und die zweite Arbeitsfläche daher an gegenüberliegenden Seiten der Sonotrode angeordnet.

Auf diese Weise werden daher auch die Probleme beim axialen Einleiten von Fügeenergie in das Material vermieden, wie sie insbesondere beim Fügen von Kunststoffen mittels Ultraschall vorkommen. Probleme treten hierbei insbesondere beim axialen Ultraschallschweißen von Kunststoffteilen mit nicht ebenen Oberflächen auf. Üblicherweise liegt am mit den zu verschweißenden Bauteilen in Kontakt kommenden axialen Ende der Sonotrode eine maximale Schwingungsamplitude, also ein Bauch des Schwingungssignals der Sonotrode, vor. Weisen die zu verschweißenden Bauteile nun keine gleichmäßige Oberfläche, beispielsweise aufgrund von Ungenauigkeiten oder Schwankungen bei der Herstellung der Bauteile, auf, dann kann es zu lokalen Über- und/oder Unterschweißungen durch Überhitzung oder mangelnde Erwärmung kommen. Insbesondere beim Verschweißen von Kunststoffbeuteln kann es somit zu einer Überhitzung und damit zu einer irreparablen Beschädigung des Kunststoffbeutels kommen. Dies ist jedoch nachteilig für die Schweißverbindung insgesamt, weil es die Fügeteile nicht verlässlich verbindet oder die Fügeteile beim Verbinden beschädigt.

Im Gegensatz dazu wird durch die erfindungsgemäß bevorzugte Reibschweißsonotrode, da die Arbeitsfläche der Sonotrode an einer Seitenfläche vorhanden ist, Fügeenergie lateral in die erste und/oder die zweite Fügezone eingeleitet. Auf diese Weise bildet sich eine Schweißverbindung ohne lokale Über- oder Unterschweißungen zwischen dem ersten und dem zweiten Fügeteil sowie dem dritten und dem vierten Fügeteil aus.

Als Parameter zur Einstellung des Schweißverfahrens werden insbesondere die Amplitude der Sonotrode, der auf die zu verschweißenden Fügeteile ausgeübte Druck sowie die Fügedauer variiert. In einer bevorzugten Ausführungsform findet keine Variation der Schwingungsfrequenz der Sonotrode statt. Dies bedeutet, dass in einem Arbeitsprozess der Sonotrode diese durch den Generator auf die gleiche Frequenz bzw. auf die gleiche zuvor gewählte Frequenz bzw. Arbeitsfrequenz geregelt wird.

Nachdem der Schweißprozess abgeschlossen ist, werden die erste Arbeitsfläche der Sonotrode und die erste Druckfläche des ersten Ambosses auseinander bewegt, damit die miteinander verschweißten ersten und zweiten Fügeteile aus der Schweißvorrichtung entnehmbar sind. Analog werden die zweite Arbeitsfläche der Sonotrode und die zweite Druckfläche des zweiten Ambosses auseinander bewegt, damit die miteinander verschweißten dritten und vierten Fügeteile aus der Schweißvorrichtung entnehmbar sind.
Ein Vorteil der vorliegenden Erfindung sind die schnellen Arbeitszyklen aufgrund des schnellen, effizienten und kostengünstigen Schweißverfahrens. Ebenso sind der Wartungsaufwand sowie der benötigte Raum für die Schweißvorrichtung im Vergleich zum Wärmeschweißen oder herkömmlichen Ultraschallschweißen gering, genauso wie der Aufwand zum Steuern des Verfahrens. Dies ist vor allem damit begründet, dass die erfindungsgemäß bevorzugte Sonotrode zwei Arbeitsflächen bereitstellt, so dass gleichzeitig oder in zeitlicher Abstimmung aufeinander zwei Kunststoffbeutel herstellbar sind.

Erfindungsgemäß weist die erste oder die zweite Arbeitsfläche der Sonotrode eine Struktur auf, insbesondere in Form einer Mehrzahl von Erhebungen. Mittels dieser Struktur wird ein im Betrieb an die Sonotrode gedrücktes Fügeteil von der Sonotrode mitgenommen und in Schwingung versetzt. Die Struktur der Sonotrode kann daher auch als Mitnahmestruktur bezeichnet werden. Vorzugsweise verkrallt sich die Mitnahmestruktur in dem angrenzenden Fügeteil, so dass das angrenzende Fügeteil im Wesentlichen die gleichen Bewegungen wie die Sonotrode ausführt. Auf diese Weise ist eine Verbindung zwischen zwei Fügeteilen mittels Reibschweißen effektiv realisierbar.
Eine erfindungsgemäße Schweißvorrichtung bzw. Reibschweißvorrichtung zum Reibschweißen von mindestens zwei Fügeteilen, die zumindest teilweise aus verschweißbarem Kunststoff bestehen, umfasst eine erfindungsgemäße Sonotrode mit einer ersten Arbeitsfläche, die bezogen auf eine Längsachse eines Grundkörpers lateral angeordnet ist, und mit einer zweiten Arbeitsfläche, die bezogen auf die Längsachse des Grundkörpers ebenfalls lateral angeordnet ist, sowie einen ersten Amboss mit einer ersten Druckfläche und einen zweiten Amboss mit einer zweiten Druckfläche, wobei im Betrieb der Schweißvorrichtung ein erstes und ein zweites Fügeteil mittels der ersten Druckfläche des ersten Ambosses und der ersten lateralen Arbeitsfläche miteinander verschweißbar sind und ein drittes und ein viertes Fügeteil sind mittels der zweiten Druckfläche des zweiten Ambosses und der zweiten lateralen Arbeitsfläche miteinander verschweißbar. Im Hinblick auf die Arbeitsweise und die sich daraus ergebenen Vorteile wird auf die obigen Ausführungen zur erfindungsgemäßen Sonotrode verwiesen.
Besonders bevorzugt ist es, wenn die erste Druckfläche des ersten Ambosses und/oder die zweite Druckfläche des zweiten Ambosses eine Struktur aufweist, insbesondere in Form einer Mehrzahl von Erhebungen. Aufgrund der Mehrzahl von Erhebungen kann ein jeweiliges Fügeteil besonders sicher zwischen der jeweiligen Druckfläche und der entsprechenden Arbeitsfläche gehalten bzw. eingeklemmt werden. Insbesondere verkrallt sich die jeweilige Druckfläche des Ambosses mittels dieser Struktur in dem jeweiligen an die entsprechende Druckfläche angrenzenden Fügeteil. Auf diese Weise ist ein effektives Festhalten des entsprechenden Fügeteils realisierbar. Die Struktur der jeweiligen Druckfläche des entsprechenden Ambosses kann daher auch als Festhaltestruktur bezeichnet werden. Diese Ausführungsform ist besonders bevorzugt in Kombination mit der Sonotrode, deren jeweilige Arbeitsfläche eine Struktur zum Mitnehmen eines daran anliegenden Fügeteils aufweist.

Das erfindungsgemäße Schweißverfahren bzw. Reibschweißverfahren mit einer erfindungsgemäßen Schweißvorrichtung umfasst die Schritte: Bereitstellen eines ersten und eines zweiten Fügeteils sowie eines dritten und eines vierten Fügeteils, die zumindest teilweise aus verschweißbarem Kunststoff bestehen, Anordnen des ersten und des zweiten Fügeteils zwischen einer lateral zur Schwingungsrichtung einer Sonotrode angeordneten ersten Arbeitsfläche der Sonotrode und einer ersten Druckfläche eines ersten Ambosses, Anordnen des dritten und des vierten Fügeteils zwischen einer lateral zur Schwingungsrichtung einer Sonotrode angeordneten zweiten Arbeitsfläche der Sonotrode und einer zweiten Druckfläche eines zweiten Ambosses, Anregen der Sonotrode zum Schwingen entlang und/oder quer zu einer Längsachse eines Grundkörpers der Sonotrode, wodurch Fügeenergie lateral in eine erste und/oder zweite Fügezone einleitbar ist und sich eine Schweißverbindung zwischen dem ersten und dem zweiten Fügeteil und/oder zwischen dem dritten und dem vierten Fügeteil ausbildet, und Auseinanderbewegen der ersten Arbeitsfläche der Sonotrode und der ersten Druckfläche des ersten Ambosses und/oder der zweiten Arbeitsfläche der Sonotrode und der zweiten Druckfläche des zweiten Ambosses, damit die miteinander verschweißten ersten und zweiten Fügeteile und/oder dritten und vierten Fügeteile aus der Schweißvorrichtung entnehmbar sind. Im Hinblick auf die Arbeitsweise des erfindungsgemäßen Schweißverfahrens wird auf die obigen Ausführungen zur erfindungsgemäßen Sonotrode verwiesen. Die sich ergebenden Vorteile entsprechend den bei der erfindungsgemäßen Sonotrode diskutierten Vorteilen.

In einer bevorzugten Ausführungsform des Schweißverfahrens erfolgt eine Schwingung der Sonotrode im Ultraschallbereich, vorzugsweise zwischen 20 und 40 kHz, besonders bevorzugt zwischen 20 und 30 kHz. Aufgrund der angegebenen Frequenzbereiche arbeitet die Sonotrode im Ultraschallbereich und ein schnelles, effizientes und wirtschaftliches Verbinden der mindestens zwei Fügeteile miteinander ist gewährleistet.
In einer weiteren bevorzugten Ausführungsform des Schweißverfahrens erfolgt das Verschweißen des ersten und des zweiten Fügeteils sowie des dritten und des vierten Fügeteils gleichzeitig. Auf diese Weise ist das Verfahren besonders effizient, da zwei Produkte, wie beispielsweise Kunststoffbeutel, gleichzeitig herstellbar sind.

Ein Kunststoffbeutel wurde mit dem erfindungsgemäßen Schweißverfahren hergestellt. Vorzugsweise handelt es sich bei dem Kunststoff um einen aus der nachfolgenden Gruppe: Polyethylen (PE), Polypropylen (PP), Polyethylenterephthalat (PET) oder einer Kombination davon, wobei das zweite Fügeteil und das erste Fügeteil aus dem gleichen oder aus unterschiedlichem Material bestehen können. Gleiche Materialien sind besonders bevorzugt, da dann eine besonders zuverlässige Schweißverbindung erzielbar ist. Dasselbe gilt für das dritte und das vierte Fügeteil.
Nachfolgend wird unter Bezugnahme auf die Zeichnungen eine Ausführungsform der vorliegenden Erfindung detailliert beschrieben. In den Zeichnungen zeigen gleiche Bezugszeichen gleiche Bauteile. Es zeigen:
- Figur 1: eine erste Ausführungsform einer erfindungsgemäß bevorzugten Sonotrode
- Figur 2: eine perspektivische Ansicht der Sonotrode aus Fig. 1,
- Figur 3: eine Seitenansicht der Sonotrode aus Fig. 1,
- Figur 4: eine Ausführungsform einer erfindungsgemäß bevorzugten Schweißvorrichtung in einer ersten Position,
- Figur 5: eine Ausführungsform einer erfindungsgemäß bevorzugten Schweißvorrichtung in einer zweiten Position,
- Figur 6: einen schematischen Verfahrensablauf einer Ausführungsform des erfindungsgemäßen Schweißverfahrens.

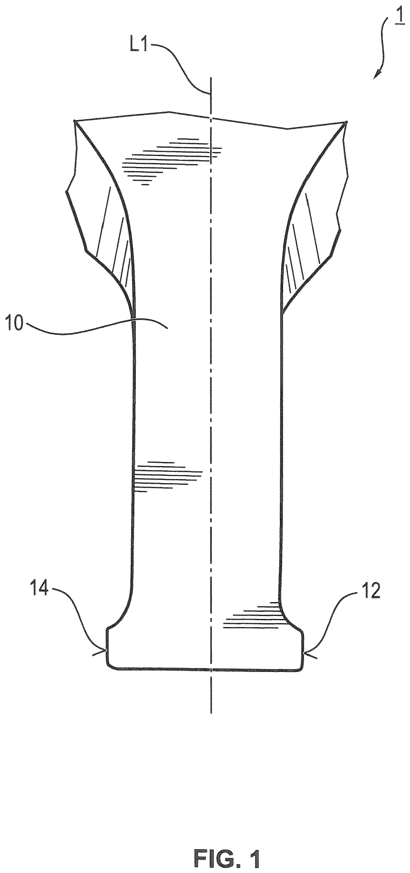

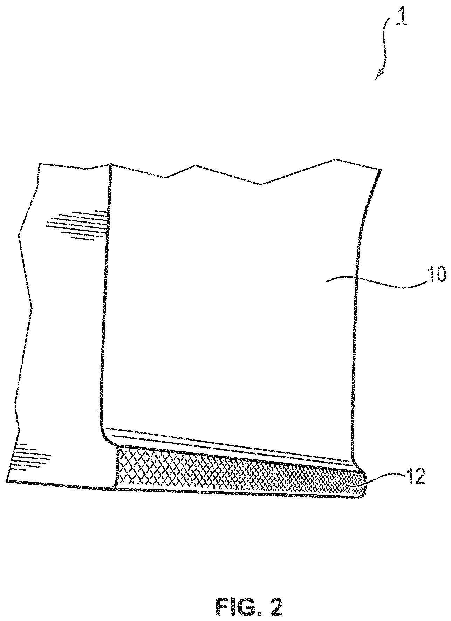

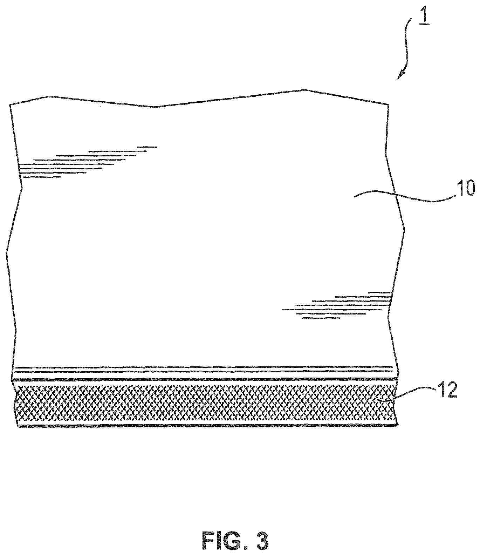

Die Ausführungsform der erfindungsgemäßen Schweißvorrichtung bzw. Reibschweißvorrichtung wird anhand des Verschweißens eines Kunststoffbeutels erläutert. Die zu verschweißenden Kunststoffbeutel bestehen beispielhaft aus zwei Folien, die als Material vorzugsweise thermoplastischen Kunststoff aufweisen, insbesondere Polyethylen (PE), Polypropylen (PP) oder Polyethylenterephthalat (PET) (siehe oben). Somit umfassen im nachfolgenden Beispiel alle Folien, und somit alle vier Fügeteile, das gleiche Material. Alternativ können die vier Fügeteile auch unterschiedliche Materialien umfassen. Verwendet werden die Kunststoffbeutel beispielsweise zur Lagerung und zum Transport von fließfähigen Produkten, wie Seife, Getränken u.ä.
Bezug nehmend auf die Figuren 1 bis 3 wird zunächst die Sonotrode 1 erläutert. Die Sonotrode 1 umfasst einen Grundkörper 10 mit einer im Wesentlichen quaderförmingen Grundform. Der Grundkörper weist eine Längsachse L1 sowie eine erste 12 und eine zweite Arbeitsfläche 14 auf. Ein erstes Ende entlang der Längsachse L1 ist später im Betrieb in Eingriff mit einer Schweißvorrichtung, während das gegenüberliegende Ende als zweites Ende bezeichnet wird. Wird der Grundkörper 10 vom zweiten Ende her betrachtet, weist er vorzugsweise einen rechteckigen Umriss auf. Entlang der Längsachse L1 und/oder quer dazu ist die Sonotrode 1 im späteren Betrieb in einer Schweißvorrichtung 3 auslenkbar, was später detailliert erläutert wird. Benachbart des zweiten Endes sind die erste 12 und die zweite Arbeitsfläche 14 an gegenüberliegenden Seiten des Grundkörpers 10 angeordnet. Insbesondere sind die erste 12 und die zweite Arbeitsfläche 14 an den langen Seiten des rechteckigen Grundrisses angeordnet.
Wie in den Figuren 2 und 3 besonders gut erkennbar, weist die erste Arbeitsfläche 12 eine Struktur auf, die vorzugsweise aus einer Mehrzahl von Erhebungen besteht. Die zweite Arbeitsfläche 14 weist erfindungsgemäß keine Struktur auf. Die Erhebungen sorgen für eine Vergrößerung der Oberfläche, mit der die erste Arbeitsfläche 12 später an den miteinander zu verschweißenden Fügeteilen anliegt. Somit sind die Fügeteile besser zwischen der Arbeitsfläche 12 und einer Druckfläche befestigbar, was nachfolgend unter Bezugnahme auf die Schweißvorrichtung erläutert wird. Erfindungsgemäß weist nur eine der Arbeitsflächen 12, 14 eine Struktur auf.

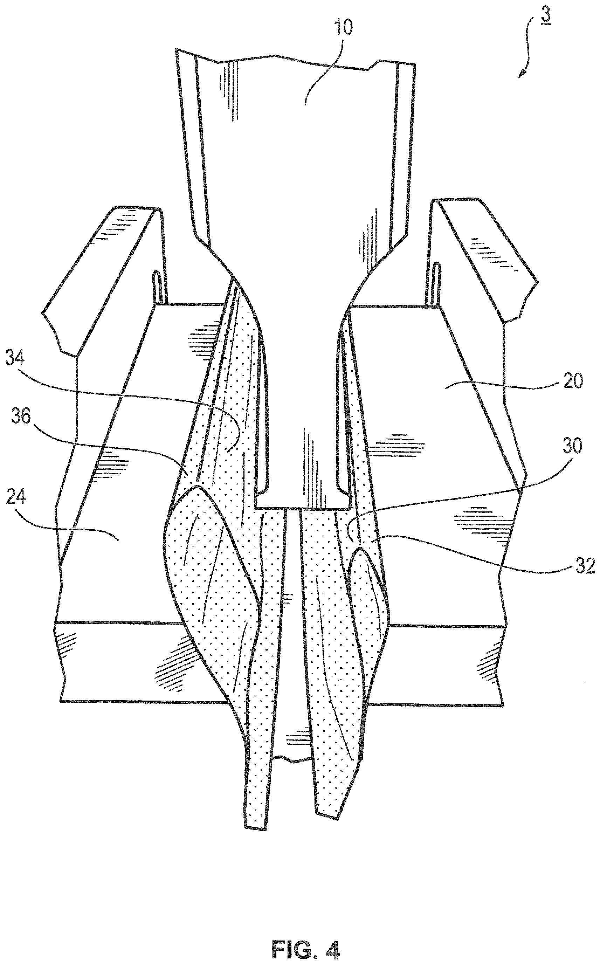

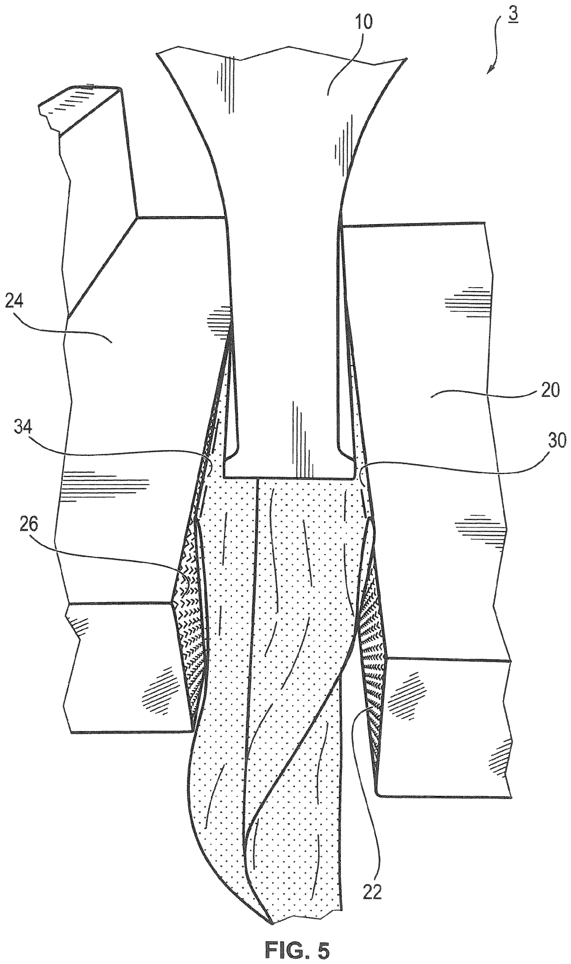

In den Figuren 4 und 5 ist die Schweißvorrichtung 3 dargestellt. Die Schweißvorrichtung 3 umfasst die unter Bezugnahme auf die Figuren 1 bis 3 beschriebene Sonotrode 1 sowie einen ersten Amboss 20 mit einer ersten Druckfläche 22 und einen zweiten Amboss 24 mit einer zweiten Druckfläche 26. Weiterhin sind in Figur 4 zwei umgelenkte Folien dargestellt, die zwischen der ersten Arbeitsfläche 12 und der ersten Druckfläche 22 sowie zwischen der zweiten Arbeitsfläche 14 und der zweiten Druckfläche 26 angeordnet sind. Die erste umgelenkte Folie stellt ein erstes 30 und ein zweites Fügeteil 32 dar und die zweite Folie stellt ein drittes 34 und ein viertes Fügeteil 36 dar.
In Figur 5 befinden sich die jeweiligen Arbeitsfläche 12, 14 der Sonotrode 1 in Eingriff mit der jeweiligen Druckfläche 22, 26 des jeweiligen Ambosses 20, 24. Zwischen der ersten Arbeitsfläche 12 und der ersten Druckfläche 22 sind das erste 30 und das zweite Fügeteil 32 angeordnet, während zwischen der zweiten Arbeitsfläche 14 und der zweiten Druckfläche 26 das dritte 34 und das vierte Fügeteil 36 angeordnet sind. Weiterhin ist erkennbar, dass die erste 22 und die zweite Druckfläche 26 eine Struktur aufweisen, insbesondere in der Form einer Mehrzahl von Erhebungen. Alternativ kann nur eine von beiden Druckfläche 22, 26 eine Struktur aufweisen oder keine der Druckflächen 22, 26 weist eine Struktur auf.

Durch die Struktur der Sonotrode 1 an der ersten 12 oder der zweiten Arbeitsfläche 14, die auch als Mitnahmestruktur bezeichnet wird, wird im Betrieb der Sonotrode 1 das daran anliegende Fügeteil in Schwingung versetzt. Durch die Struktur der ersten 22 und/oder der zweiten Druckfläche 26, die auch als Festhaltestruktur bezeichnet wird, wird das daran anliegende Fügeteil bezogen auf eine Bewegung der Sonotrode 1 vorzugsweise in seiner Position festgehalten. Mittels der jeweiligen Strukturen ist daher eine Reibschweißverbindung zwischen zwei Fügeteilen 30, 32 und/oder 34, 36 effektiv realisierbar, unabhängig von der Reihenfolge der Anordnung der Fügeteile 30, 32 und 34, 36 zwischen dem jeweiligen Amboss 20, 24 und der Arbeitsfläche 12, 14 der Sonotrode 1.
Eine Schwingung der Sonotrode 1 zum Verschweißen des ersten 30 und des zweiten Fügeteils 32 miteinander sowie des dritten 34 und des vierten Fügeteils 36 erfolgt gemäß einer bevorzugten Ausführungsform entlang der Längsachse L1 der Sonotrode 1. In diesem Fall bewegen sich die beiden Arbeitsflächen in einer jeweiligen Ebene parallel zur Arbeitsebene der Sonotrode entlang einer Geraden. In einer alternativen bevorzugten Ausführungsfrom erfolgt die Bewegung der beiden Arbeitsflächen innerhalb der jeweiligen Ebene parallel zur Arbeitsebene in Abhängigkeit von der Ausgestaltung der Sonotrode in einem anderen Bewegungsmuster, wie beispielsweise entlang einer krummlinigen Bahn. Dies bedeutet, dass, Bezug nehmend auf die Figuren 4 und 5, die Schwingung also nicht nur nach oben und unten erfolgt, sondern auch nach vorne und hinten. Neben dem dargestellten gleichzeitigen Verschweißen von zwei Kunststoffbeuteln sind andere Abläufe möglich. Beispielsweise kann abwechselnd ein Kunststoffbeutel zwischen erster Arbeitsfläche 12 und erster Druckfläche 22 sowie zwischen zweiter Arbeitsfläche 14 und zweiter Druckfläche 26 hergestellt werden.

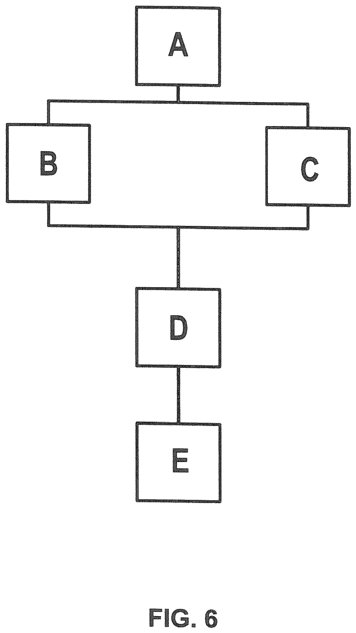

Nachfolgend Bezug nehmend auf Figur 6 wird ein beispielhafter Verfahrensablauf eines Schweißverfahrens erläutert. In einem ersten Schritt A werden das erste 30, das zweite 32, das dritte 34 sowie das vierte Fügeteil 36 bereitgestellt. Nachfolgend werden das erste 30 und das zweite Fügeteil 32 in Schritt B zwischen der ersten Arbeitsfläche 12 und der ersten Druckfläche 22 angeordnet. Gleichzeitig, danach oder davor werden das dritte 34 und das vierte Fügeteil 36 in Schritt C zwischen der zweiten Arbeitsfläche 14 und der zweiten Druckfläche 26 angeordnet.

Nun werden vorzugsweise die jeweiligen Druckflächen 22, 26 in Richtung der jeweiligen Arbeitsflächen 12, 14 bewegt, so dass die entsprechenden Fügeteile 30 und 32 sowie 34 und 36 eingeklemmt werden. Sobald die Fügeteile 30 und 32 sowie 34 und 36 eingeklemmt sind, wird die Sonotrode 1 in Schritt D zum Schwingen entlang und/oder quer zur Längsachse L1 des Grundkörpers 10 angeregt. Auf diese Weise wird Fügeenergie lateral in eine erste und zweite Fügezone eingeleitet und es bildet sich eine Schweißverbindung zwischen dem ersten 30 und dem zweiten Fügeteil 32 und zwischen dem dritten 34 und dem vierten Fügeteil 36 aus.

Aufgrund der Anordnung der Fügeteile 30 und 32 sowie 34 und 36 an den seitlichen Arbeitsflächen 12 und 14 der Sonotrode 1 wird die Fügeenergie in die Fügezone auch nur seitlich bzw. tangential eingeleitet. Dadurch werden bestimmte Nachteile des Ultraschallschweißens, wie lokale Über- oder Unterschweißungen, beim axialen Kontakt zwischen der Sonotrode 1 und dem zu verschweißenden Bereich vermieden. Eine Schwingung der Sonotrode 1 hängt hierbei insbesondere von dem zu verarbeitendem Material ab. Beispielsweise kann die Schwingung im Bereich von 20 bis 40 kHz, bevorzugt 20 bis 30 kHz liegen. Eine Variierung der Schweißparameter der Schweißvorrichtung 3 erfolgt vorzugsweise nur insoweit, als dass die Amplitude, die Schweißdauer oder die Einklemmkraft variiert werden. Insbesondere eine Variierung der Arbeitsfrequenz erfolgt jedoch nicht.

In Schritt E werden die erste Arbeitsfläche 12 der Sonotrode 1 und die erste Druckfläche 22 des ersten Ambosses 20 auseinanderbewegt. Ebenso werden die zweite Arbeitsfläche 14 der Sonotrode 1 und die zweite Druckfläche 26 des zweiten Ambosses 24 auseinanderbewegt. Auf diese Weise sind die miteinander verschweißten ersten 30 und zweiten Fügeteile 32 und die dritten 34 und vierten Fügeteile 36 aus der Schweißvorrichtung 3 entnehmbar.

Alternativ erfolgen die oben dargelegten Schritte nicht gleichzeitig sondern zeitversetzt bzw. im Wechsel zueinander. Beispielsweise folgt nach Schritt B der Schritt D nur mit dem Verschweißen des ersten 30 und des zweiten Fügeteils 32. Gleichzeitig mit diesem Schritt D erfolgt Schritt C. Wenn der Schritt D für das erste 30 und das zweite Fügeteil 32 beendet ist, wird Schritt E für das erste 30 und das zweite Fügeteil 32 durchgeführt, während Schritt D für das dritte 34 und das vierte Fügeteil 36 durchgeführt wird.

In einer weiteren Ausführungsform werden die Sonotrode 1 sowie der erste 20 und der zweite Amboss 24 während der Schritte B bis E zwischen einer ersten und einer zweiten Position hin- und herbewegt. Auf diese Weise erfolgt ein Weitertransport der herzustellenden Kunststoffbeutel auch in der Schweißvorrichtung 3, so dass der Verfahrensablauf weiter optimiert ist.

### Bezugszeichenliste

- 1: Sonotrode
- 3: Schweißvorrichtung
- 10: Grundkörper
- 12: erste Arbeitsfläche
- 14: zweite Arbeitsfläche
- 20: erster Amboss
- 22: erste Druckfläche
- 24: zweiter Amboss
- 26: zweite Druckfläche
- 30: erstes Fügeteil
- 32: zweites Fügeteil
- 34: drittes Fügeteil
- 36: viertes Fügeteil
- L1: Längsachse

## Patentansprüche

1. Sonotrode (1) zum Reibschweißen von mindestens zwei Fügeteilen (30, 32; 34, 36), die zumindest teilweise aus verschweißbarem Kunststoff bestehen, umfassend:
a) einen Grundkörper (10), der eine Längsachse (L1) aufweist, die in einer Arbeitsebene der Sonotrode (1) liegt, wobei die Sonotrode (1) im Betrieb innerhalb dieser Arbeitsebene auslenkbar ist, wobei
b) eine erste Arbeitsfläche (12) bezogen auf die Längsachse (L1) lateral an der Sonotrode (1) angeordnet ist, so dass Fügeenergie lateral in eine erste Fügezone zwischen einem ersten (30) und einem zweiten Fügeteil (32) einleitbar ist, und
c) eine zweite Arbeitsfläche (14) bezogen auf die Längsachse (L1) lateral an der Sonotrode (1) angeordnet ist, so dass Fügeenergie lateral in eine zweite Fügezone zwischen einem dritten (34) und einem vierten Fügeteil (36) einleitbar ist, wobei
d) sich im Betrieb die erste Arbeitsfläche (12) in einer ersten Ebene parallel zur Arbeitsebene und die zweite Arbeitsfläche (14) sich in einer zweiten Ebene parallel zur Arbeitsebene bewegen, und
e) die erste (12) oder die zweite Arbeitsfläche (14) der Sonotrode (1) eine Struktur aufweist, insbesondere in Form einer Mehrzahl von Erhebungen, und die verbleibende von der ersten (12) oder der zweiten Arbeitsfläche (14) der Sonotrode (1) keine Struktur aufweist.

2. Sonotrode (1) gemäß Patentanspruch 1, wobei die erste (12) und die zweite Arbeitsfläche (14) auf gegenüberliegenden Seiten der Sonotrode (1) angeordnet sind.

3. Schweißvorrichtung (3) zum Reibschweißen von mindestens zwei Fügeteilen (30, 32; 34, 36), die zumindest teilweise aus verschweißbarem Kunststoff bestehen, umfassend:
a) eine Sonotrode (1) gemäß einem der Patentansprüche 1 oder 2 mit einer ersten Arbeitsfläche (12), die bezogen auf eine Längsachse (L1) eines Grundkörpers (10) lateral angeordnet ist, und mit einer zweiten Arbeitsfläche (14), die bezogen auf die Längsachse (L1) des Grundkörpers (10) ebenfalls lateral angeordnet ist, sowie
b) einen ersten Amboss (20) mit einer ersten Druckfläche (22) und einen zweiten Amboss (24) mit einer zweiten Druckfläche (26), wobei
c) im Betrieb der Schweißvorrichtung (3) ein erstes (30) und ein zweites Fügeteil (32) mittels der ersten Druckfläche (22) des ersten Ambosses (20) und der ersten lateralen Arbeitsfläche (12) miteinander verschweißbar sind und
d) ein drittes (34) und ein viertes Fügeteil (36) sind mittels der zweiten Druckfläche (26) des zweiten Ambosses (24) und der zweiten lateralen Arbeitsfläche (14) miteinander verschweißbar.

4. Schweißvorrichtung (3) gemäß Patentanspruch 3, wobei die erste (22) und/oder die zweite Druckfläche (26) eine Struktur aufweist, insbesondere in Form einer Mehrzahl von Erhebungen.

5. Schweißverfahren mit einer Schweißvorrichtung (3) gemäß einem der Patentansprüche 3 oder 4, das die Schritte umfasst:
a) Bereitstellen (A) eines ersten (30) und eines zweiten Fügeteils (32) sowie eines dritten (34) und eines vierten Fügeteils (36), die zumindest teilweise aus verschweißbarem Kunststoff bestehen,
b) Anordnen (B) des ersten (30) und des zweiten Fügeteils (32) zwischen einer lateral zur Schwingungsrichtung einer Sonotrode (1) angeordneten ersten Arbeitsfläche (12) der Sonotrode (1) und einer ersten Druckfläche (22) eines ersten Ambosses (20),
c) Anordnen (C) des dritten (34) und des vierten Fügeteils (36) zwischen einer lateral zur Schwingungsrichtung der Sonotrode (1) angeordneten zweiten Arbeitsfläche (14) der Sonotrode (1) und einer zweiten Druckfläche (26) eines zweiten Ambosses (24),
d) Anregen (D) der Sonotrode (1) zum Schwingen entlang und/oder quer zu einer Längsachse (L1) des Grundkörpers (16), wodurch Fügeenergie lateral in eine erste und/oder zweite Fügezone einleitbar ist und sich eine Schweißverbindung zwischen dem ersten (30) und dem zweiten Fügeteil (32) und/oder zwischen dem dritten (34) und dem vierten Fügeteil (36) ausbildet, und
e) Auseinanderbewegen (E) der ersten Arbeitsfläche (12) der Sonotrode (1) und der ersten Druckfläche (22) des ersten Ambosses (20) und/oder der zweiten Arbeitsfläche (14) der Sonotrode (1) und der zweiten Druckfläche (26) des zweiten Ambosses (24), damit die miteinander verschweißten ersten (30) und zweiten Fügeteile (32) und/oder dritten (34) und vierten Fügeteile (36) aus der Schweißvorrichtung (3) entnehmbar sind.

6. Schweißverfahren gemäß Patentanspruch 5, wobei eine Schwingung der Sonotrode (1) im Ultraschallbereich erfolgt, vorzugsweise zwischen 20 und 40 kHz, besonders bevorzugt zwischen 20 und 30 kHz.

7. Schweißverfahren gemäß einem der Patentansprüche 5 oder 6, wobei das erste (30) und das zweite Fügeteil (32) zumindest teilweise zeitgleich mit dem dritten (34) und dem vierten Fügeteil (36) in Schritt d. verschweißt wird.

## Claims

1. Sonotrode (1) for frictional welding of at least two joining parts (30; 32; 34; 36), which at least partly consist of a weldable plastic, comprising:
a. a main body (10) having a longitudinal axis, which lies in a workplane of the sonotrode (1), wherein during operation, the sonotrode (1) is deflectable within this workplane, wherein
b. a first workplane (12) is placed laterally to the sonotrode with respect to the longitudinal axis (L1), so that joining energy can be inputted laterally into a first joining zone between a first (30) and a second joining part (32), and
c. a second workplane (14) is placed laterally to the sonotrode with respect to the longitudinal axis, so that joining energy can be inputted laterally into a second joining zone between a third (34) and a fourth joining part (36), wherein
d. during operation, the first workplane (12) moves in a first plane parallel to the workplane and the second workplane (14) moves in a second plane parallel to the workplane, and
e. the first (12) or the second workplane (14) of the sonotrode (1) show a structure, especially designed as a plurality of projections, and the remaining one of the first (12) or the second workplane (14) of the sonotrode (1) does not show any structure.

2. Sonotrode (1) according to patent claim 1, wherein the first (12) and the second workplane (14) are placed on opposite sides of the sonotrode (1).

3. Welding device (3) for frictional welding of at least two joining parts (30; 32; 34; 36), which at least partly consist of a weldable plastic, comprising:
a. a sonotrode (1) according to one of the patent claims 1 or 2, comprising a first workplane (12), which is placed laterally with respect to the longitudinal axis (L1) of a main body (10), and comprising a second workplane (14), which is also placed laterally with respect to the longitudinal axis (L1) of the main body, and
b. a first anvil (20) having a first pressure face (22) and a second anvil (24) having a second pressure face (26), wherein
c. when the welding device (3) is in operation, a first (30) and a second joining part (32) are weldable via the first pressure face (22) of the first anvil (20) and the first lateral workplane (12) and
d. a third (34) and a fourth joining part (36) are weldable via the second pressure face (26) of the second anvil (24) and the second lateral workplane (14).

4. Welding device (3) according to patent claim 3, wherein the first (22) and/or the second pressure face (26) shows a structure, especially designed as a plurality of projections.

5. Welding method including a welding device (3) according to one of the patent claims 3 or 4, comprising the following steps:
a. providing (A) of a first (30) and a second joining part (32) as well as of a third (34) and a fourth joining part (36), which at least partly consist of a weldable plastic,
b. arranging (B) of the first (30) and the second joining part (32) between a first workplane (12) of a sonotrode (1), which is placed laterally to the vibrating direction of the sonotrode (1), and a first pressure face (22) of a first anvil (20),
c. arranging (C) of the third (34) and the fourth joining part (36) between a second workplane (14) of the sonotrode (1), which is placed laterally to the vibrating direction of the sonotrode (1) and a second pressure face (26) of a second anvil (24),
d. causing (D) the sonotrode (1) to oscillate along and/or perpendicular to a longitudinal axis (L1) of the main body (16), by means of which joining energy can be inputted laterally into a first and/or second welding zone and a welding connection is formed between the first (30) and the second joining part (32) and/or between the third (34) and the fourth joining part (36), and
e. moving apart (E) of the first workplane (12) of the sonotrode (1) and the first pressure face (22) of the first anvil (20) and/or the second workplane (14) of the sonotrode (1) and the second pressure face (26) of the second anvil (24), so that the welded first (30) and second joining parts (32) and/or third (34) and fourth joining parts (36) are removable from the welding device (3).

6. Welding method according to patent claim 5, wherein an oscillation of the sonotrode (1) takes place in an ultrasonic range, preferably between 20 and 40 kHz, especially preferred between 20 and 30 kHz.

7. Welding method according to one of the patent claims 5 or 6, wherein the first (30) and the second joining part (32) are in step d. at least partly welded simultaneously to the third (34) and the fourth joining part (36).

## Revendications

1. Sonotrode (1) pour le soudage par friction d'au moins deux pièces de jonction (30, 32 ; 34, 36) au moins partiellement constituées d'un plastique soudable, comportant :
a) un corps de base (10) présentant un axe longitudinal (L1) s'étendant dans un plan de travail de la sonotrode (1), la sonotrode (1) pouvant être fléchie dans ce plan de travail pendant le fonctionnement, où
b) une première surface de travail (12) est disposée latéralement sur la sonotrode (1) par rapport à l'axe longitudinal (L1), de telle façon que de l'énergie de jonction peut être induite latéralement dans une première zone de jonction entre une première (30) et une deuxième pièce de jonction (32), et
c) une deuxième surface de travail (14) est disposée latéralement sur la sonotrode (1) par rapport à l'axe longitudinal (L1), de telle façon que de l'énergie de jonction peut être induite latéralement dans une deuxième zone de jonction entre une troisième (34) et une quatrième pièce de jonction (36), où
d) pendant le fonctionnement, la première surface de travail (12) se déplace dans un premier plan parallèle au plan de travail et la deuxième surface de travail (14) se déplace dans un deuxième plan parallèle au plan de travail, et
e) la première (12) ou la deuxième surface de travail (14) de la sonotrode (1) présente une structure, en particulier sous la forme d'une pluralité de protubérances, et l'autre parmi la première (12) ou la deuxième surface de travail (14) de la sonotrode (1) ne présente pas de structure.

2. Sonotrode (1) selon la revendication 1, dans laquelle la première (12) et la deuxième surface de travail (14) sont disposées sur des côtés opposés de la sonotrode (1).

3. Dispositif de soudage (3) pour le soudage par friction d'au moins deux pièces de jonction (30, 32 ; 34, 36) au moins partiellement constituées d'un plastique soudable, comportant :
a) une sonotrode (1) selon l'une des revendications 1 ou 2, avec une première surface de travail (12) disposée latéralement par rapport à un axe longitudinal (L1) d'un corps de base (10), et avec une deuxième surface de travail (14) également disposée latéralement par rapport à l'axe longitudinal (L1) du corps de base (10), et
b) une première enclume (20) avec une première surface de pression (22) et une deuxième enclume (24) avec une deuxième surface de pression (26), où
c) pendant le fonctionnement du dispositif de soudage (3), une première (30) et une deuxième pièce de jonction (32) peuvent être soudées ensemble à l'aide de la première surface de pression (22) de la première enclume (20) et de la première surface de travail (12) latérale, et
d) une troisième (34) et une quatrième pièce de jonction (36) peuvent être soudées ensemble à l'aide de la deuxième surface de pression (26) de la deuxième enclume (24) et de la deuxième surface de travail (14) latérale.

4. Dispositif de soudage (3) selon la revendication 3, dans lequel la première (22) et/ou la deuxième surface de pression (26) présente/présentent une structure, en particulier sous la forme d'une pluralité de protubérances.

5. Procédé de soudage avec un dispositif de soudage (3) selon l'une des revendications 3 ou 4, comportant les étapes suivantes :
a) mise à disposition (A) d'une première (30) et d'une deuxième pièce de jonction (32) ainsi que d'une troisième (34) et d'une quatrième pièce de jonction (36), lesquelles sont au moins partiellement constituées d'un plastique soudable,
b) agencement (B) de la première (30) et de la deuxième pièce de jonction (32) entre une première surface de travail (12) de la sonotrode (1) disposée latéralement par rapport à la direction d'oscillation d'une sonotrode (1) et une première surface de pression (22) d'une première enclume (20),
c) agencement (C) de la troisième (34) et de la quatrième pièce de jonction (36) entre une deuxième surface de travail (14) de la sonotrode (1) disposée latéralement par rapport à la direction d'oscillation de la sonotrode (1) et une deuxième surface de pression (26) d'une deuxième enclume (24),
d) excitation (D) de la sonotrode (1) pour l'amener à osciller le long d'un axe longitudinal (L1) du corps de base (10) et/ou transversalement à celui-ci, moyennant quoi une énergie de jonction peut être induite latéralement dans une première et/ou une deuxième zone de jonction et un assemblage par soudage est formé entre la première (30) et la deuxième pièce de jonction (32) et/ou entre la troisième (34) et la quatrième pièce de jonction (36), et
e) écartement (E) de la première surface de travail (12) de la sonotrode (1) et de la première surface de pression (22) de la première enclume (20) et/ou de la deuxième surface de travail (14) de la sonotrode (1) et de la deuxième surface de pression (26) de la deuxième enclume (24), afin de pouvoir retirer la première (30) et la deuxième pièce de jonction (32) et/ou la troisième (34) et la quatrième pièce de jonction (36) soudées ensemble hors du dispositif de soudage (3).

6. Procédé de soudage selon la revendication 5, dans lequel une oscillation de la sonotrode (1) est réalisée dans la plage des ultrasons, de préférence entre 20 et 40 kHz, de manière particulièrement préférentielle entre 20 et 30 kHz.

7. Procédé de soudage selon l'une des revendications 5 ou 6, dans lequel la première (30) et la deuxième pièce de jonction (32) sont soudées au moins partiellement simultanément avec la troisième (34) et la quatrième pièce de jonction (36) à l'étape d.
